# EUROPÄISCHE PATENTSCHRIFT

(11) **EP 0 958 103 B1**
(45) Veröffentlichungstag und Bekanntmachung des Hinweises auf die Patenterteilung: **26.11.2003**
(21) Anmeldenummer: 98908071.8
(22) Anmeldetag: 09.02.1998
(51) Int. Cl.: B23Q 11/00, B23Q 11/10, B02C 18/14

(54) **AUFBEREITUNGSEINRICHTUNG FÜR SPÄNE ENTHALTENDE KÜHL- UND SCHMIERSTOFFE**
RECYCLING DEVICE FOR CHIPS-CONTAINING COOLANTS AND LUBRICANTS
DISPOSITIF DE RECUPERATION DE REFRIGERANTS ET DE LUBRIFIANTS CONTENANT DES COPEAUX

(30) Priorität: 10.02.1997 DE 19704859
(43) Veröffentlichungstag der Anmeldung: 24.11.1999
(73) Patentinhaber: FILTERWERK MANN + HUMMEL GmbH, 71631 Ludwigsburg (DE)
(72) Erfinder: JANSSEN, Mark, B-3582 Beringem (BE)
(74) Vertreter: Voth, Gerhard, Dipl.-Ing.
(86) Internationale Anmeldenummer: EP9800684
(87) Internationale Veröffentlichungsnummer: WO98034758

(56) Entgegenhaltungen:
- EP-A- 0 229 997
- EP-A- 0 346 540
- EP-A- 0 441 170
- EP-A- 0 518 095
- DE-U- 29 616 893
- GB-A- 463 242
- PATENT ABSTRACTS OF JAPAN vol. 097, no. 001, 31.Januar 1997 & JP 08 238436 A (TSUBAKIMOTO MEIFURAN KK), 17.September 1996,

## Beschreibung

Die Erfindung betrifft eine Aufbereitungseinrichtung für Späne enthaltende Kühl- und Schmierstoffe, die aus einem Behälter besteht, in welchem eine Zuführleitung mündet und wobei eine Pumpe vorgesehen ist zum Abführen und Weitertransport der zugeführten Stoffe.

Aus de OS 195 01 921 ist eine Vorrichtung zum Entsorgen von flüssigen Medien bekannt. Diese besteht aus einem Behälter, in welchem ein Unterdruck aufgebaut wird, wobei dieser mit einem weiteren Ansaugbehälter in Verbindung steht. Durch den Unterdruck werden die Flüssigen Medien diesem Behälter zugeführt werden. Dem Behälter ist femer eine Pumpe nachgeschaltet, die die flüssigen Medien zu einer Aufbereitungseinrichtung weiter transportiert.

Ein Nachteil dieses Systems ist darin zu sehen, dass bei der Erzeugung des Unterdrucks mit Schadstoffen belastete Luft ausgetragen wird, die wiederum eine entsprechende Aufbereitung erfordert. Außerdem besteht die Gefahr, dass Grobspäne die Pumpe beschädigen.

Es ist aus der DE-OS 44 36 002 ein Förderer für flüssige Medien bekannt, bei welchem Grobspäne einer Zerkleinerungseinrichtung zugeführt werden und erst danach ein Weitertransport der mit Rückständen behafteten Flüssigkeit erfolge. Hierzu ist jedoch ein aufwendiges System mit einem Kratzerförderer notwendig, welches einen hohen Platzbedarf erfordert und außerdem wartungsaufwendig ist.

Aus der EP 0 518 095 ist eine Transport- und Zerkleinerungsvorrichtung zur Entsorgung von flüssigen Medien mit Produktionsrückständen wie Späne, Kühl- und Schmiermittel aus der Industrie bekannt. Diese weist mehrere Komponenten auf, wie beispielsweise Transportpumpe, Zerkleinerungseinrichtung, Sieb und Austragseinrichtung sowie Flüssigkeitsbehälter. Dieses System soll Grob- und Feinschmutz bzw. Späne trennen, so dass die Grobspäne der Zerkleinerungseinrichtung zugeführt werden können.

Der Erfindung liegt die Aufgabe zu Grunde, eine Aufbereitungseinrichtung für Späne enthaltende Kühl- und Schmierstoffe zu schaffen, die kompakt aufgebaut ist und einen zuverlässigen Weitertransport ermöglicht.

Diese Aufgabe wird durch die Merkmale des Hauptanspruchs gelöst.

Der wesentliche Vorteil der Erfindung liegt darin, dass in dem Behälter der Aufbereitungseinrichtung eine Einrichtung zum Zerkleinern der zugeführten Späne angeordnet ist.

Gemäß der Erfindung ist die Einrichtung zum Zerkleinern der zugeführten Späne als Modul aufgebaut. Je nach Anwendungsfall kann dieses Modul am Behälter angeordnet bzw. von dem Behälter entfernt werden. Außerdem besteht die Möglichkeit, das Modul entsprechend der Struktur oder der Werkstoffeigenschaften der zugeführten Späne zu optimieren. Außerdem lässt sich das Modul bei einem eventuell auftretenden Defekt schnell austauschen. Falls den zugeführten Kühl- und Schmierstoffen Fremdteile beigefügt sind, die von der Zerkleinerungseinrichtung nicht bewältigt werden können, werden diese auf Grund einer Stromüberwachung erkannt, der Motor schaltet kurzzeitig in einen Reversierbetrieb. Sollten nach mehrmaligem Umschalten ein Zerkleinem der Fremdteile nicht möglich sein, besteht die Möglichkeit, über eine Öffnung im Behälter diese Teile zu entfernen.

Die Aufbereitungseinrichtung für Späne enthaltende Kühl- und Schmierstoffe weist eine selbstansaugende Pumpe auf. Diese hat den Vorteil, dass sie auch bei sehr geringem Flüssigkeitspegel bereits einen ausreichenden Pumpendruck erzeugt. Zur Verhinderung des Trockenlaufens kann die Pumpe mit einer entsprechenden Überwachungseinrichtung ausgestattet sein.

Eine sehr kompakte Anordnung ergibt sich dadurch, dass sowohl die Pumpe als auch die Einrichtung zum Zerkleinern der zugeführten Späne in dem Behälter angeordnet ist.

Die Einrichtung zum Zerkleinern der zugeführten Späne kann gemäß einer vorteilhaften Ausgestaltung der Erfindung aus einer einzigen Zahnwalze bestehen. Dieser Zahnwalze ist ein Kammblech zugeordnet, so dass die Späne durch die Drehbewegung der Zahnwalze an dem Kammblech abgeschert werden.

Der Motor, insbesondere ein Elektromotor ist außerhalb des Behälters angeordnet. Die Zahnwalze wird über eine Kette oder einen Zahnriemen von dem Motor angetrieben.

Gemäß einer Ausgestaltung der Erfindung ist unterhalb der Zahnwalze eine Lochblech angeordnet. Dieses Lochblech dient als Sicherheitsfilterelement und weist eine Lochgröße auf, die so gewählt ist, dass Späne, die durch die Löcher hindurchtreten, gefahrlos von der nachgeschalteten Pumpe weiter transportiert werden können.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand von Ausführungsbeispielen näher erläutert.

Es zeigt:
- Figur 1: die Schnittdarstellung einer Aufbereitungseinrichtung,
- Figur 2: eine Draufsicht auf eine Einrichtung zum Zerkleinern der zugeführten Späne,
- Figur 3: eine Aufbereitungseinrichtung mit einer selbstansaugenden Pumpe.

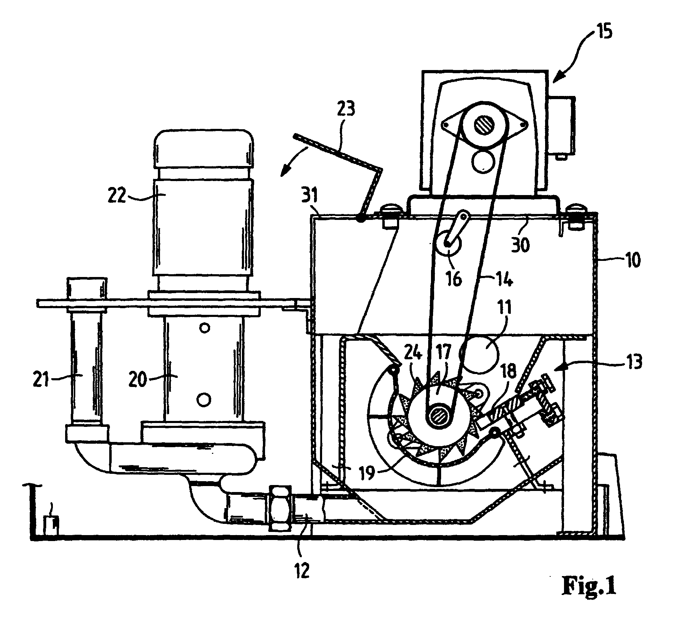

Die Aufbereitungseinrichtung gemäß Figur 1 besteht aus einem Behälter 10 der mit einer Zuführleitung 11 sowie eine Abführleitung 12 in Verbindung steht. In dem Behälter 10 ist eine Einrichtung 13 zum Zerkleinern der zugeführten Späne vorgesehen. Diese Einrichtung wird über eine Antriebskette 14 von einem auf dem Behälter befestigten Elektromotor angetrieben. Der beträgt Elektromotor weist ein Untersetzungsgetriebe auf, die Antriebsdrehzahl beträgt etwa 80 pro Minute. Die Antriebskette 14 läuft entlang eines Kettenspanners 16 und treibt eine Walze 17 an, welche an ihrem Umfang Zähne aufweist. Die Zerkleinerungseinrichtung 13 ist ferner mit einem Kammblech 18 versehen, durch die Rotation der Zahnwalze werden die dem Behälter 10 zugeführten Späne zwischen den Zähnen und dem Kammblech abgeschert. Unterhalb der Walze 17 befindet sich ein Lochblech 19, die ausreichend zerkleinerten Späne gelangen durch das Lochblech in den unteren Bereich des Behälters, die nicht durch das Lochblech hindurchgetretenen Späne werden mit der Zahnwalze wieder mit nach oben genommen und erneut zerkleinert. Die über die Zuführleitung 11 in den Behälter einströmenden Kühl-oder Schmierstoffe sowie die zerkleinerten Späne, gelangen über die Abführleitung 12 zu einer Pumpe 20, diese Pumpe weist ein Freistromlaufrad auf und fördert die Späne enthaltenden Stoffe zu einer Ausgangsleitung 21. Die Pumpe wird mittels eines Elektromotors 22 angetrieben.

An dem Behälter 10 ist eine Schwenkklappe 23 vorgesehen, diese ermöglicht eine Sichtkontrolle der Zerkleinerungseinrichtung bzw. vereinfacht die Wartung der in dem Behälter angeordneten Bauteile.

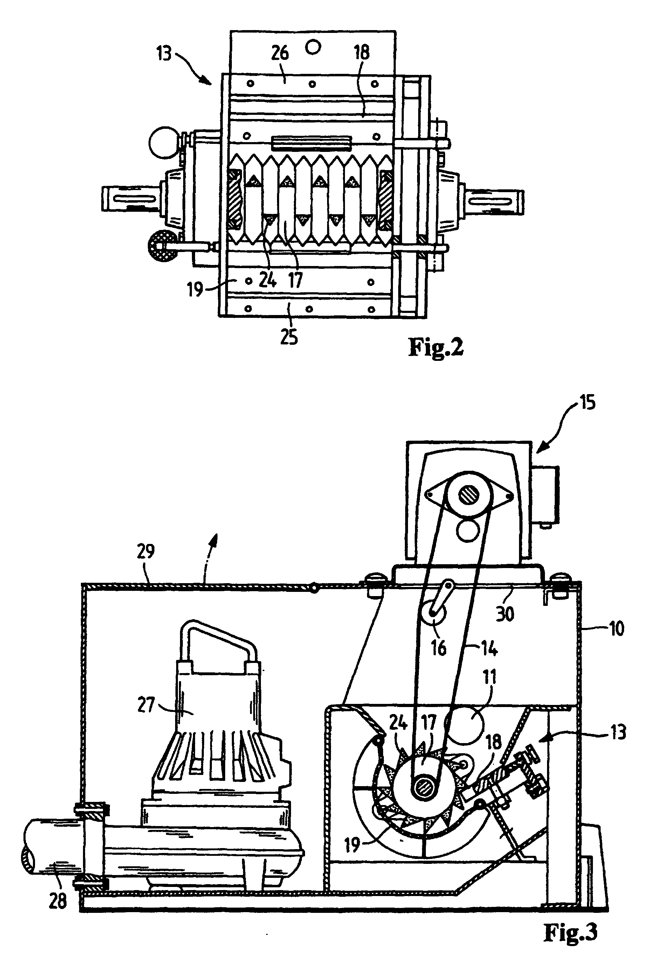

Figur 2 zeigt eine Draufsicht auf die Zerkleinerungseinrichtung 13. Wie bereits erwähnt, ist die Walze 17 mit Zähnen 24 versehen, diese gleiten an dem Kammblech 18 vorbei und bewirken das Abscheren der zugeführten Späne. Unterhalb der Walze 17 ist das Lochblech 19 angeordnet und seitlich an den Trägem 25, 26 befestigt.

Figur 3 zeigt die Variante eines Behälters, gleiche Teile sind mit gleichem Bezugszeichen versehen. In den Behälter ist eine selbstansaugende Pumpe 27 integriert. Die Pumpe steht unmittelbar auf dem Behälterboden und fördert die angesaugte Flüssigkeit in eine Ausgangsleitung 28. Für Wartungsarbeiten kann ein an einem Scharnier befestigter Deckel 29 an dem Behälter 10 geöffnet werden. Selbstverständlich besteht auch die Möglichkeit, bei der Aufbereitung bzw. bei dem Weitertransport von Kühl-oder Schmierstoffe die Schleifspäne oder bereits zerkleinerte Späne enthalten, auf die Zerkleinerungseinrichtung 13 zu verzichten.

Da die Zerkleinerungseinrichtung als Modul aufgebaut ist, das heißt der Elektromotor 15 bildet mit der Zerkleinerungseinheit eine bauliche Einheit, kann dieses bei Bedarf ausgetauscht - oder falls nicht erforderlich - völlig entfernt werden. Ein Behälter in dem lediglich die selbstansaugende Pumpe vorgesehen ist dient dazu, die dem Behälter zugeführten Kühl-oder Schmierstoffe über eine Druckerhöhung zu einer Reinigungs-oder Filtereinnrichtung zu führen.

### Bezugszeichenliste

- 10: Behälter
- 11: Zuführleitung
- 12: Abführleitung
- 13: Zerkleinerungseinrichtung
- 14: Antriebskette
- 15: Elektromotor
- 16: Kettenspanner
- 17: Walze
- 18: Kammblech
- 19: Lochblech
- 20: Pumpe
- 21: Ausgangsleitung
- 22: Elektromotor
- 23: Schwenkklappe
- 24: Zähne
- 25: Träger
- 26: Träger
- 27: Pumpe
- 28: Ausgangsleitung
- 29: Deckel
- 30: Öffnung
- 31: Öffnung

## Patentansprüche

1. Aufbereitungseinrichtung für Späne enthaltende Kühl- und Schmierstoffe mit einer Zuführleitung, einem Behälter (10) sowie einer mit dem Behälter (10) in Verbindung stehenden Pumpe (27), wobei deren Druckseite mit einer Abführleitung (12) in Verbindung steht, **dadurch gekennzeichnet, dass**
- die Pumpe (27) eine Eintrittsöffnung nahe dem Behälterbodenniveau aufweist und eine selbstansaugende Pumpe ist und wobei
- die Pumpe (27) in den Behälter integriert ist
- und eine Einrichtung (13) zum Zerkleinern der zugeführten Späne in dem einzigen Behälter (10) angeordnet ist, wobei
- die Einrichtung (13) zum Zerkleinern der zugeführten Späne als Modul aufgebaut ist und
- an dem Behälter eine Öffnung (30) zum Einsetzen des Moduls vorgesehen ist,
- wobei der Behälter ferner eine Öffnung (31) für Wartungszwecke aufweist.

2. Aufbereitungseinrichtung nach Anspruch 1, **dadurch gekennzeichnet, dass** die Einrichtung (13) zum Zerkleinern der zugeführten Späne aus einer Zahnwalze (17) besteht, die von einem insbesondere außerhalb des Behälters angeordneten Motor (22) angetrieben wird und welcher ein Kammblech (18) zugeordnet ist.

3. Aufbereitungseinrichtung nach Anspruch 2, **dadurch gekennzeichnet, dass** unterhalb der Zahlwalze (17) ein Lochblech (19) als Sicherheitsfilterelement vorgesehen ist.

4. Aufbereitungseinrichtung nach einem der vorherigen Ansprüche, **dadurch gekennzeichnet, dass** die Einrichtung (13) zum Zerkleinern der zugeführten Späne mit einer Stromüberwachung ausgestattet ist und bei einem Anstieg des Stroms über einen bestimmten Sollwert der Motor (22) in einen Reversierbetrieb umschaltet.

5. Aufbereitungseinrichtung nach Anspruch 1, **dadurch gekennzeichnet, dass** die Pumpe (27) eine Überwachungseinrichtung aufweist, die ein Trockenlaufen verhindert.

## Claims

1. Processing apparatus for coolants and lubricants which contain metal pieces, said apparatus having a supply line, a container (10) and a pump (27), which communicates with the container (10), the pressure side of said pump communicating with a discharge line (12), **characterised in that**
- the pump (27) has an inlet aperture in the vicinity of the bottom level of the container and is a self-priming/suction pump,
- the pump (27) being incorporated in the container,
- and an apparatus (13) for comminuting the supplied metal pieces is disposed in the single container (10),
- the apparatus (13) for comminuting the supplied metal pieces being constructed as a module, and
- an opening (30) for the insertion of the module is provided on the container,
- the container also having an opening (31) for maintenance purposes.

2. Processing apparatus according to claim 1, **characterised in that** the apparatus (13) for comminuting the supplied metal pieces comprises a toothed roller (17), which is driven by a motor (22), more especially disposed externally of the container, and a comblike sheet metal plate (18) is associated with said roller.

3. Processing apparatus according to claim 2, **characterised in that** a perforated sheet metal plate (19) is provided beneath the toothed roller (17) as a safety filter element.

4. Processing apparatus according to one of the previous claims, **characterised in that** the apparatus (13) for comminuting the supplied metal pieces is provided with a current monitoring means, and the motor (22) switches-over into a reversing operation if the current rises above a specific intended value.

5. Processing apparatus according to claim 1, **characterised in that** the pump (27) has a monitoring apparatus which prevents the pump from running dry.

## Revendications

1. Dispositif de préparation de réfrigérants-lubrifiants contenant des copeaux, comprenant une conduite d'amenée, un réservoir (10), ainsi qu'une pompe (27) qui est en communication avec le réservoir (10), le côté de pression de cette pompe étant en communication avec une conduite de départ (12),
**caractérisé en ce que**
- la pompe (27) présente une ouverture d'entrée proche du niveau du fond du réservoir et une pompe auto aspirante,
- la pompe (27) est intégrée dans le réservoir,
- un dispositif (13) destiné à broyer les copeaux acheminés est disposé dans l'unique réservoir (10),
- le dispositif (13) destiné à broyer les copeaux acheminés étant construit sous la forme d'un module et
- une ouverture (30) pour la mise en place du module est prévue sur le réservoir,
- le réservoir présentant en outre une ouverture (31) pour les besoins de l'entretien.

2. Dispositif de préparation selon la revendication 1,
**caractérisé en ce que**
le dispositif (13) destiné à broyer les copeaux acheminés est composé d'un tambour denté (17) entraîné par un moteur (22), en particulier disposé à l'extérieur du réservoir, et auquel est associée une plaque formant peigne (18).

3. Dispositif de préparation selon la revendication 2,
**caractérisé en ce qu'**
une tôle perforée (19) est prévue au-dessous du tambour denté (17) pour servir d'élément filtrant de sécurité.

4. Dispositif de préparation selon une quelconque des revendications précédentes,
**caractérisé en ce que**
le dispositif (13) destiné à broyer les copeaux acheminés est équipé d'une surveillance du courant et, si le courant s'élève au-dessus d'une valeur de consigne déterminée, le moteur (22) commute sur un fonctionnement inversé.

5. Dispositif de préparation selon la revendication 1,
**caractérisé en ce que**
la pompe (27) présente un dispositif de surveillance qui interdit la marche à sec.
